# EUROPÄISCHE PATENTSCHRIFT

(11) **EP 2 183 954 B1**
(45) Veröffentlichungstag und Bekanntmachung des Hinweises auf die Patenterteilung: **21.08.2013**
(21) Anmeldenummer: 09168791.3
(22) Anmeldetag: 27.08.2009
(51) Int. Cl.: A01D 41/127

(54) **Erstellung von Bilddatenbanken für Bildauswertung**
Production of image databases for image evaluation
Etablissement de banques de données d'images pour une évaluation d'image

(30) Priorität: 10.11.2008 DE 102008056557
(43) Veröffentlichungstag der Anmeldung: 12.05.2010
(73) Patentinhaber: CLAAS Selbstfahrende Erntemaschinen GmbH, 33428 Harsewinkel (DE)
(72) Erfinder: Behnke, Willi, 33803, Steinhagen (DE); Kettelhoit, Boris, 33335, Gütersloh (DE)

(56) Entgegenhaltungen:
- EP-A1- 1 446 997
- EP-A1- 1 495 663
- EP-A1- 1 763 988
- US-A- 6 119 442

## Beschreibung

Die Erfindung betrifft ein Verfahren und eine Vorrichtung zur Erstellung einer Bilddatenbank für ein Bildauswertverfahren, vorzugsweise in landwirtschaftlichem Kontext, nach dem Oberbegriff des Anspruchs 1.

Aus dem umfangreichen Stand der Technik sei hier beispielhaft auf die US 6,119,442 verwiesen, in der eine als Mähdrescher ausgeführte landwirtschaftliche Arbeitsmaschine offenbart ist, der im Bereich ihrer Arbeitsorgane eine Vielzahl von Kamerasystemen zur Detektion des die jeweiligen Arbeitsorgane durchlaufenden Gutstromes zugeordnet sind. Der landwirtschaftlichen Arbeitsmaschine ist zudem eine Datenverarbeitungseinrichtung zugeordnet, welche eine Auswertung der von den verschiedenen Kamerasystemen generierten Bilder ermöglicht. Basierend auf der Auswertung der Bildinformationen ist die Datenverarbeitungseinrichtung zudem so beschaffen, dass sie basierend auf der Auswertung der Bildinformationen Steuersignale für die jeweiligen Arbeitsorgane generiert. Damit wird in der US 6,119,442 ein Steuer- und Regelsystem offenbart, welches kamerabasiert die Betriebsparameter der Arbeitsorgane im Echtzeitbetrieb optimiert. Da bei der Auswertung von Bilddaten in der Regel enorme Datenmengen analysiert werden müssen, sind derartige System wegen der begrenzt verfügbaren Speicherkapazitäten und Datenübertragungsraten auf der landwirtschaftlichen Arbeitsmaschine auf einfache Analysen beschränkt. Dies hat insbesondere den Nachteil, dass die zwischen den Arbeitsorganen der landwirtschaftlichen Arbeitsmaschine bestehenden komplexen Zusammenhänge nur ungenügend oder mit so hohem zeitlichem Versatz abgebildet werden können, dass eine Regelung der Arbeitsorgane via Kamerasystemen im sogenannten Echtzeitbetrieb nur eingeschränkt möglich ist.

Wegen der großen zu verarbeitenden Datenmengen werden die von Kamerasystemen generierten Bilddaten in der Regel nicht abgespeichert, da sie nur für die Analyse eines momentanen Betriebspunktes und die Ableitung optimierter Betriebsparameter der Arbeitsorgane benötigt werden. Derartig generierte Bilder haben für spätere Analysen auch nur einen eingeschränkten Informationsgehalt, da sie nur mehr oder weniger präzise den Gutstrom abbilden, jedoch keinerlei Informationen über die Betriebszustände der Arbeitsorgane und nicht sichtbare Eigenschaften, wie etwa die Feuchtigkeit des Erntegutes, umfassen.

Die EP 1 763 988 A1 beschreibt ein Verfahren sowie eine Vorrichtung zur Durchführung des Verfahrens gemäß den Oberbegriffen der Ansprüche 1 und 10. Gemäß der EP 1 763 988 A1 werden an einer dem betreffenden Arbeitsaggregat nachgeordneten Position im Ernteguttransportweg bei verschiedenen Einstellzuständen mit bestimmten Steuerparameter-Einstellwerten des Arbeitsaggregats zunächst Bilder oder Bildserien des Ernteguts erzeugt. Diese Bilder oder Bildserien werden unter Zuordnung von zu dem jeweiligen Einstellzustand des betreffenden Arbeitsaggregats zugehörigen Steuerparameter-Einstellwerten gespeichert. Es wird dann aufgrund einer qualitativen, Analyse des auf den Bildern oder Bildserien dar-gestellten Erntegutstroms ein Bild oder eine Bildserie ausgewählt und das betreffende Arbeitsaggregat schließlich unter Verwendung der dem ausgewählten Bild oder der ausgewählten Bildserie zugeordneten Steuerparameter-Einstellwerte eingestellt.

Es ist deshalb Aufgabe der Erfindung die beschriebenen Nachteile des Standes der Technik zu vermeiden und insbesondere ein Verfahren und eine Vorrichtung zur Erstellung von Bilddatenbanken vorzuschlagen, deren in einer Bilddatenbank hinterlegten Bilddaten über einen aufgewerteten Informationsgehalt verfügen, sodass die Bilddaten für spätere Analysen brauchbare Informationen umfassen.

Diese Aufgabe wird erfindungsgemäß durch die kennzeichnenden Merkmale der Ansprüche 1 und 10 gelöst.

Indem das Verfahren zur Erstellung einer Bilddatenbank für ein Bildauswertverfahren zumindest die Merkmale umfasst, dass die Bilder der Bilddatenbank während des Arbeitsprozesses einer landwirtschaftlichen Arbeitsmaschine von zumindest einer der landwirtschaftlichen Arbeitsmaschine zugeordneten, mit einer Steuer- und Regeleinrichtung der landwirtschaftlichen Arbeitsmaschine verbunden Kamera generiert und die von der zumindest einen Kamera generierten Einzelbilder mit spezifischen Daten des Arbeitsprozesses der landwirtschaftlichen Arbeitsmaschine verknüpft werden und jedes mit spezifischen Daten verknüpfte Einzelbild in der Bilddatenbank wiederholt abrufbar und editierbar hinterlegt wird, wobei die generierten, mit den spezifischen Daten des Arbeitsprozesses verknüpften Einzelbilder an eine von der Steuer- und Regeleinrichtung umfassenden Datenverarbeitungseinrichtung oder einen nicht auf der landwirtschaftlichen Arbeitsmaschine befindlichen Zentralrechner übergeben werden, wobei die Bilddatenbank in dem Zentralrechner oder in der Datenverarbeitungseinrichtung generiert wird, wird sichergestellt, dass die mit einem aufgewerteten Informationsgehalt versehenen Bilddaten für spätere Analysen brauchbare Informationen umfassen. Dies hat insbesondere den Vorteil, dass nicht unmittelbar aus dem jeweiligen Bild selbst entnehmbare, aber für eine optimale Einstellung der Arbeitsorgane einer landwirtschaftlichen Arbeitsmaschine neben den Bildinformationen notwendige Informationen unmittelbar dem jeweiligen Einzelbild zuordenbar sind, sodass im Ergebnis mit diesen zusätzlichen Informationen der Optimierungsprozess verbessert wird. Indem die von dem zumindest einen Kamerasystem generierten Einzelbilder in einer Datenverarbeitungseinrichtung mit spezifischen Daten des Arbeitsprozesses der landwirtschaftlichen Arbeitsmaschine verknüpft werden und jedes mit spezifischen Daten verknüpfte Einzelbild in der **der Datenverarbeitungseinrichtung zugeordneten Bilddatenbank oder** in einer, dem Zentralrechner zugeordneten Bilddatenbank wiederholt abrufbar und editierbar gespeichert wird, wird sichergestellt, dass eine so strukturierte Vorrichtung zur Erstellung von Bilddatenbanken Bilddaten mit aufgewertetem Informationsgehalt erstellt, die für spätere Analysen brauchbare Informationen umfassen. Die Fahrgeschwindigkeit ist als zusätzliche Information mit dem jeweiligen Einzelbild verknüpft, sodass durch geeignete Schwellwertfilter während der Bildanalyse dafür gesorgt wird, dass sich die Art der Bildanalyse fahrgeschwindigkeitsabhängig ändert und bei zu hohen Fahrgeschwindigkeiten generierte Einzelbilder während der Bildanalyse unberücksichtigt bleiben. Eine solche Struktur hat zudem den Vorteil, dass die Bilddatenbank im sogenannten Offline-Betrieb mit zeitaufwendigeren, aber erheblich genaueren Bildauswertverfahren analysiert werden kann. Dies reduziert auch die auf der landwirtschaftlichen Arbeitsmaschine vorzuhaltenden Rechenleistungen und schafft die Möglichkeit, auf der Suche nach einem geeigneten Bildauswertverfahren verschiedene Bildauswertverfahren zu testen.

In einer vorteilhaften Ausgestaltung der Erfindung umfassen die spezifischen Daten des Arbeitsprozesses der landwirtschaftlichen Arbeitsmaschine spezifische Daten der landwirtschaftlichen Arbeitsmaschine und/oder spezifische Daten des von der landwirtschaftlichen Arbeitsmaschine bearbeiteten Erntegutes und/oder spezifische Daten des von der landwirtschaftlichen Arbeitsmaschine bearbeiteten Territoriums. Indem Informationen bezüglich des Erntegutes, der landwirtschaftlichen Arbeitsmaschine und Umgebungsinformationen bei der Generierung der Bilddatenbank berücksichtigt werden, wird eine erhebliche Erhöhung des Informationsgehalts der in der Bilddatenbank abgelegten Einzelbilder erreicht.

In einer weiteren vorteilhaften Ausgestaltung der Erfindung umfassen die spezifischen Daten der landwirtschaftlichen Arbeitsmaschine Einstellparameter der Arbeitsorgane der landwirtschaftlichen Arbeitsmaschine, die Position des zumindest einen Kamerasystems in der landwirtschaftlichen Arbeitsmaschine und die Fahrgeschwindigkeit der landwirtschaftlichen Arbeitsmaschine. Die Betriebsparameter der Arbeitsorgane haben einen wesentlichen und in seinen generellen Wechselwirkungen bekannten Einfluss auf die Qualitätsparameter des Erntegutes und die Effizienz der landwirtschaftlichen Arbeitsmaschine, sodass derartige dem Einzelbild zugeordnete Informationen die Analyse des Bildes vereinfachen können, da sich in den Einzelbildern diese generellen Zusammenhänge wiederfinden müssen, wie etwa die Zunahme des Kömerbruchs bei zu hohen Dreschtrommeldrehzahlen. Die Position der Kamera in der landwirtschaftlichen Arbeitsmaschine hat einen wesentlichen Einfluss auf die Qualität des Einzelbildes, wobei eine bessere Bildqualität eine deutlich verbesserte Bildauswertung nach sich zieht. Die Fahrgeschwindigkeit der landwirtschaftlichen Arbeitsmaschine beeinflusst das Vibrationsverhalten der Kamerasysteme, wobei die bei höheren Fahrgeschwindigkeiten auftretenden stärkeren Vibrationen die Bildqualität verschlechtern.

In einer weiteren vorteilhaften Ausgestaltung der Erfindung sind die spezifischen Daten des von der landwirtschaftlichen Arbeitsmaschine bearbeiteten Erntegutes die Erntegutart, der Erntegutertrag, die Erntegutfeuchte, ein Schichthöhensignal als Indikator für die Bestandsdichte und sofern die landwirtschaftliche Arbeitsmaschine als Mähdrescher ausgeführt ist die Kornfeuchte, der Nichtkornanteil im Erntegut und der Bruchkornanteil. Dies hat insbesondere die Vorteile, dass nunmehr auch Erntegutinformationen mit dem Einzelbild verknüpft sind, die sich aus dem Bild selbst nicht ableiten lassen, wie dies etwa bei der Erntegutfeuchte der Fall wäre. Zudem können die via Sensor detektierten Ernteguteigenschaften, die zugleich auch in dem jeweiligen Bild erkennbar sind, bei der Bildanalyse zur Bildqualitätsbeurteilung und/oder zur Definition der relevanten Bildmerkmale - Bruchkorn, Verlustkörner, Unkrautsamen, Pflanzenteile - herangezogen werden. Bezüglich des Erntegutertrages und/oder des Erntegutdurchsatzes kann an Hand dieser Informationen während der Bildanalyse entschieden werden, ob der erforderliche Mindesterntegutdurchsatz für eine analysefähige Bildinformation im Moment der Bildgenerierung vorgelegen hat. Ist dies nicht der Fall, kann das entsprechende Einzelbild während der Bildanalyse unberücksichtigt bleiben.

In einer weiteren vorteilhaften Ausgestaltung der Erfindung umfassen die spezifischen Daten des von der landwirtschaftlichen Arbeitsmaschine bearbeiteten Territoriums Positionsdaten der landwirtschaftlichen Arbeitsmaschine, die Hangneigung und den Erntezeitpunkt. Während die Positionsdaten in der Regel für sogenannte Schlagkartierungen erforderlich sind haben die übrigen Daten auch unmittelbar Einfluss auf die Qualität und den Informationsgehalt der generierten Einzelbilder, sodass diese Informationen während der Bildanalyse auch zur Bildqualitätsbeurteilung herangezogen werden können.

In einer vorteilhaften Weiterbildung der Erfindung können die spezifischen Daten des Arbeitsprozesses der landwirtschaftlichen Arbeitsmaschine zudem manuell ermittelte Qualitätsparameter wie das Hektolitergewicht des Erntegutes, eine manuell ermittelte Kornfeuchte und Qualitätsangaben des Kunden umfassen. Derartige Informationen haben insbesondere den Vorteil, dass sie zur Kalibrierung der Bildauswertverfahren herangezogen werden können.

In einer weiteren vorteilhaften Ausgestaltung der Erfindung ist der landwirtschaftlichen Arbeitsmaschine eine Vielzahl von Kamerasystemen zugeordnet, wobei die Einzelbilder jedes Kamerasystems mit spezifischen Daten des Arbeitsprozesses der landwirtschaftlichen Arbeitsmaschine verknüpft sind und die Einzelbilder in dem Bildauswertverfahren in Abhängigkeit von der jeweiligen Kameraposition miteinander vergleichbar sind. Eine solche Ausführung hat insbesondere den Vorteil, dass der Einfluss der Kameraposition entweder überhaupt ermittelbar ist oder optimale Kamerapositionen definierbar sind.

In einer vorteilhaften Weiterbildung der Erfindung werden die spezifischen Daten des Arbeitsprozesses der landwirtschaftlichen Arbeitsmaschine von maschinenintemen Sensorsystemen generiert und/oder über GPS an die Datenverarbeitungseinrichtung übermittelt und/oder sind über eine Eingabeeinheit manuell eingebbar. Indem Informationen aus den verschiedensten Informationssystemen berücksichtigt werden, kann eine derartige Vorrichtung sehr flexibel eingesetzt werden und zugleich wird sichergestellt, dass die mit dem jeweiligen Einzelbild verknüpften Informationen sehr umfassend sind.

In einer weiteren vorteilhaften Ausgestaltung der Erfindung sind der landwirtschaftlichen Arbeitsmaschine eine Vielzahl von Kamerasystemen zugeordnet, sodass für konkret zu optimierende Parameter der landwirtschaftlichen Arbeitsmaschine auch speziell dafür generierte Bilddaten berücksichtigt werden, was im Ergebnis zu einer schnelleren und präziseren Optimierung der Arbeitsweise der landwirtschaftlichen Arbeitsmaschine führt.

Indem in einer vorteilhaften Weiterbildung der Erfindung die mit dem jeweiligen Einzelbild verknüpfen spezifischen Daten des Arbeitsprozesses der landwirtschaftlichen Arbeitsmaschine in der Datenverarbeitungseinrichtung und/oder dem Zentralrechner editierbar sind, wird sichergestellt, dass je nach verfügbarer Rechenleistung die erfindungsgemäße Bilddatenbank entweder unmittelbar auf der landwirtschaftlichen Arbeitsmaschinen oder in einer zentralen Recheneinheit generiert wird.

Damit die in der generierten Bilddatenbank enthaltenen Informationen breit nutzbar sind, ist in einer vorteilhaften Ausgestaltung der Erfindung vorgesehen, dass die in **der Datenverarbeitungseinrichtung und/oder** dem Zentralrechner hinterlegte Bilddatenbank an eine Vielzahl von landwirtschaftlichen Arbeitsmaschinen und/oder stationäre Recheneinheiten übermittelbar ist oder von diesen abgerufen werden kann.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Ansicht eines Mähdreschers mit Kamerasystemen zur Generierung der erfindungsgemäßen Bilddaten;
- Figur 2: ein schematische Darstellung der Generierung der erfindungsgemäßen Bilddatenbank;
- Figur 3: eine Detailansicht der erfindungsgemäßen Bilddatenbank.

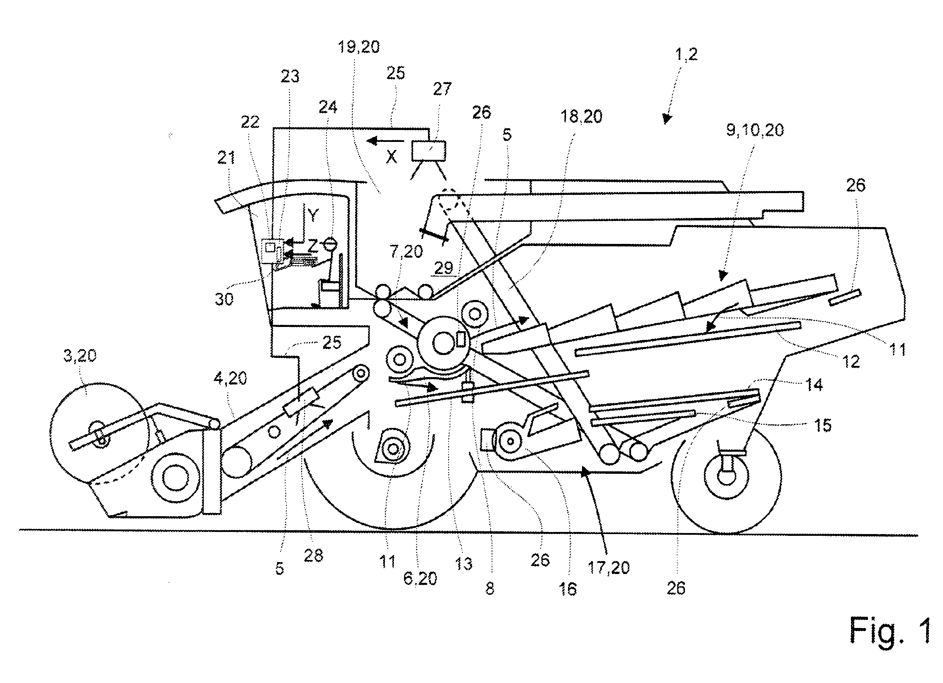

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Hordenschüttler 9 ausgeführte Trenneinrichtung 10 übergeben wird. Auf dem rotierenden Hordenschüttler 9 wird der Gutstrom 5 so gefördert, dass in dem Gutstrom enthaltene freibewegliche Körner 11 im untenseitigen Bereich des Hordenschüttlers 9 abgeschieden werden. Sowohl die am Dreschkorb 6 als auch am Hordenschüttler 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet.

Weiter verfügt die landwirtschaftliche Arbeitsmaschine 1, die abweichend vom hier dargestellten Mähdrescher 2, jede beliebige landwirtschaftliche Arbeitsmaschine wie etwa Feldhäcksler, Traktoren mit Anbaugeräten, Transportfahrzeuge und dergleichen umfassen kann, über eine Fahrzeugkabine 21 in der zumindest eine mit einer Anzeigeeinrichtung 22 versehene Steuer- und Regeleinrichtung 23 angeordnet ist, mittels derer automatisch oder vom Betreiber 24 der landwirtschaftlichen Arbeitsmaschine 1 initiiert, eine Vielzahl von, noch näher zu beschreibenden Prozessen gesteuert werden können. Die Steuer- und Regeleinrichtung 23 kommuniziert über ein sogenanntes Bussystem 25 mit noch näher zu beschreibenden Sensorsystemen 26.

Zur Beschreibung der Erfindung verfügt der in Fig. 1 dargestellte Mähdrescher über ein erstes, im Korntank 19 angeordnetes Kamerasystem 27 und ein weiters im Schrägförderer 4 angeordnetes Kamerasystem 28. Das Im Korntank 19 angeordnete Kamerasystem 27 filmt den im Korntank 19 gespeicherten Körnerstrom 29, während das im Schrägförderer 4 positionierte Kamerasystem 27 den den Schrägförderer 4 durchlaufenden Erntegutstrom 5 detektiert. Es liegt im Rahmen der Erfindung, dass der Mähdrescher 2 nur eines der dargestellten Kamerasysteme 27, 28 oder eine Vielzahl weiterer, nicht dargestellter Kamerasysteme umfassen kann. Beide Kamerasysteme 27, 28 sind leitungsbasiert oder drahtlos mit dem Bussystem 25 des Mähdreschers 2 und über dieses Bussystem 25 mit der Steuer- und Regeleinrichtung 23 zwecks Datenaustausch verbunden. Die Steuer- und Regeleinrichtung 23 umfasst eine Datenverarbeitungseinrichtung 30, in der die Bilddaten X der Kamerasysteme 27, 28, die Sensorsignale Y der verschiedenen Sensorsystem 26 sowie externe Informationssignale Z, wie etwa GPS-Signale, vom Betreiber 24 eingegebene Informationen oder aus externen Datenbanken abgerufene Informationen, verarbeitet, editiert und abgespeichert werden können.

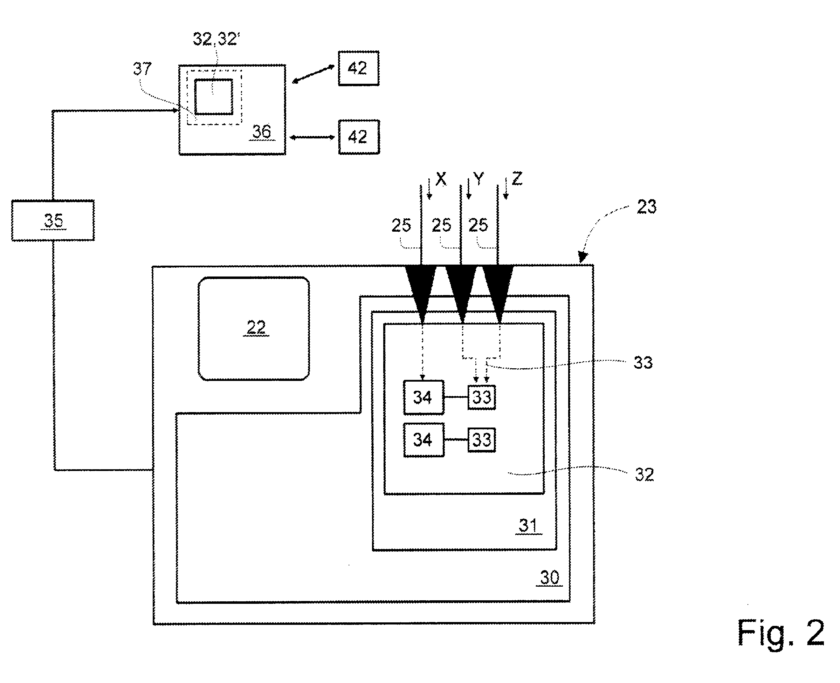

In erfindungsgemäßer Weise ist die der Steuer- und Regeleinrichtung 23 zugeordnete Datenverarbeitungseinrichtung 30 gemäß Figur 2 so beschaffen, dass sie eine Speichereinrichtung 31 zur Generierung einer noch näher zu beschreibenden Bilddatenbank 32 umfasst. Zur Erstellung der erfindungsgemäßen Bilddatenbank 32 greift die Datenverarbeitungseinrichtung 30 je nach gewünschtem Informationsgehalt der Bilddatenbank 32 auf die an sie übermittelten Bilddaten X, die Sensorsignale Y sowie die externen Informationen Z zurück, wobei die aus den Sensorsignale Y und/oder externen Informationen Z extrahierten Daten die spezifischen Daten 33 des Arbeitsprozesses der landwirtschaftlichen Arbeitsmaschine 1 bilden. Aus den Bilddaten X werden in der Datenverarbeitungseinrichtung 30 Einzelbilder 34 extrahiert und in der Bilddatenbank 32 wiederabrufbar und editierbar hinterlegt. Zugleich wird jedes Einzelbild 34 mit den im Moment der Generierung dieses Einzelbildes 34 ermittelten spezifischen Daten 33 des Arbeitsprozesses der landwirtschaftlichen Arbeitsmaschine 1 verknüpft, sodass letztlich in der erfindungsgemäßen Bilddatenbank 32 mit den jeweiligen spezifischen Daten 33 des Arbeitsprozesses der landwirtschaftlichen Arbeitsmaschine 1 verknüpfte Einzelbilder 34 wiederholt abrufbar und editierbar abgespeichert sind.

Die mit spezifischen Daten 33 des Arbeitsprozesses der landwirtschaftlichen Arbeitsmaschine 1 verknüpften Einzelbilder 34 können in einer ersten Ausgestaltung der Erfindung auf einer Speicherkarte 35 zwischengespeichert und mittels dieser an einen Zentralrechner 36, etwa einen sogenannten Hof-PC eines Landwirts, übergeben werden. Es liegt im Rahmen der Erfindung, dass die mit spezifischen Daten 33 des Arbeitsprozesses der landwirtschaftlichen Arbeitsmaschine 1 verknüpften Einzelbilder 34 auch drahtlos an einen Zentralrechner 26 übermittel werden. Zudem können wegen der auf der landwirtschaftlichen Arbeitsmaschine beschränkt verfügbaren Speicherkapazität die Einzelbilder 34 und die spezifischen Daten 34 des Arbeitsprozesses der landwirtschaftlichen Arbeitsmaschine 1 getrennt voneinander und gegebenenfalls im Onlinebetrieb an den Zentralrechner 36 übergeben werden, wobei die erfindungsgemäße Bilddatenbank 32 erst in dem Zentralrechner 36 generiert wird. Im Zentralrechner 36 kann die dort hinterlegte Bilddatenbank 32 mittels geeigneter, an sich bekannter und deshalb nicht näher beschriebener Bildauswertverfahren 37, die in der Regel auf einer speziellen Software zur Bildauswertung basieren, analysiert werden. Es liegt im Rahmen der Erfindung, dass während des Analyseprozesses die dem jeweiligen Einzelbild 34 zugeordneten spezifischen Daten 33 des Arbeitsprozesses der landwirtschaftlichen Arbeitsmaschine 1 editiert werden können oder weitere Informationen hinzufügbar sind. Auf diese Weise kann im Zentralrechner 36 eine informationsangereicherte Bilddatenbank 32' generiert werden. Zudem kann die im Zentralrechner 36 hinterlegte oder in diesem editierte Bilddatenbank 32, 32' durch Dritte 42 von dem Zentralrechner 36 abgerufen oder vom Zentralrechner 36 an Dritte 42 übermittelt werden. Ein derartiger Datenaustausch hat vor allem den Vorteil, dass die generierten Informationen von einem breiten Anwenderkreis und gegebenenfalls im laufenden Ernteprozess nachgenutzt werden können.

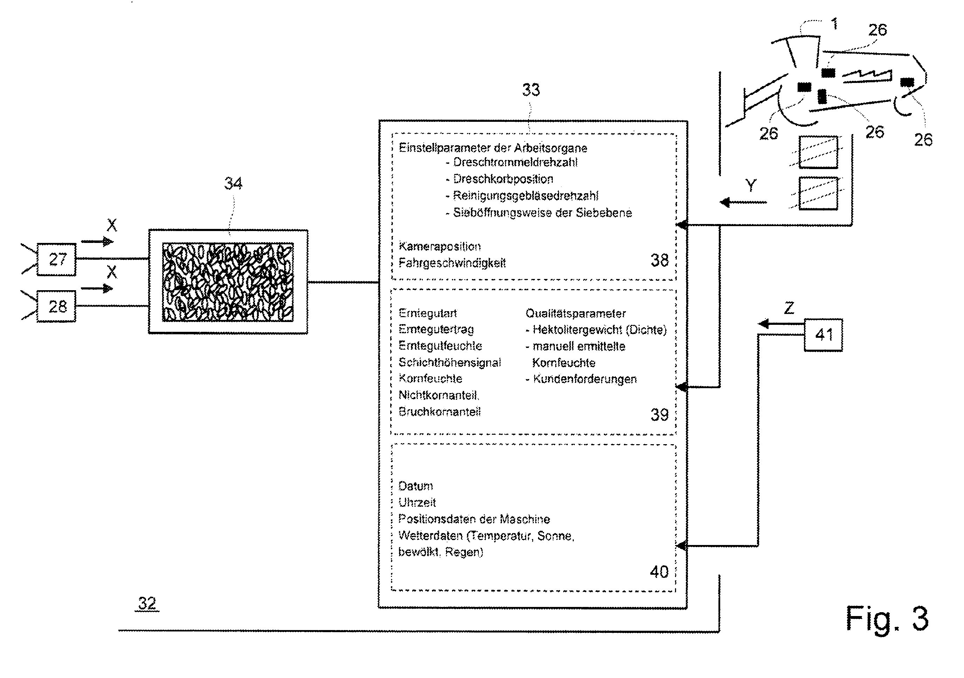

In Figur 3 wird schematisch der Informationsgehalt der Einzelbilder 34 und der ihnen zugeordneten spezifischen Daten 33 des Arbeitsprozesses der landwirtschaftlichen Arbeitsmaschine 1 sowie die Generierung der Inhalte der spezifischen Daten 33 näher beschrieben. Während das Einzelbild 34 aus den von dem oder den Kamerasystemen 27, 28 generierten Bilddaten X extrahiert wird, werden die spezifischen Daten 33 des Arbeitsprozesses der landwirtschaftlichen Arbeitsmaschine 1 aus den Sensorsignalen Y und den externen Informationen Z abgeleitet. Im Wesentlichen lassen sich diese spezifischen Daten 33 in spezifische Daten 38 der landwirtschaftlichen Arbeitsmaschine 1, spezifische Daten 39 des von der landwirtschaftlichen Arbeitsmaschine 1 bearbeiteten Erntegutes 5 und spezifische Daten 40 des von der landwirtschaftlichen Arbeitsmaschine 1 bearbeiteten Territoriums unterteilen. Je nach gewünschtem Inhalt dieser spezifischen Daten 38-40 werden für deren Generierung die Sensorsignale Y der auf der landwirtschaftlichen Arbeitsmaschine angeordneten Sensoren 26 oder die an die landwirtschaftliche Arbeitsmaschine 1 übermittelten Informationen Z einer externen Informationsquelle 41 herangezogen.

Beispielsweise kann die externe Informationsquelle 41 ein GPS-System zur Bestimmung der Position der landwirtschaftlichen Arbeitsmaschine, vom Betreiber 24 der landwirtschaftlichen Arbeitsmaschine 1 eingebbare Informationen, wie der durch Datum und Uhrzeit bestimmte Erntezeitpunkt, oder von externen Datenbanken, etwa Wetterdatenbanken, abrufbare Informationen umfassen. In diesem Zusammenhang liegt es im Rahmen der Erfindung, dass die vorzugsweise von der externen Informationsquelle 41 bereitgestellten Informationen Z zudem manuell ermittelte Qualitätsparameter wie das Hektolitergewicht - die Dichte des Erntegutes, eine manuell ermittelte Kornfeuchte und Qualitätsangaben des Kunden umfassen können.

Über an sich bekannte und deshalb hier technisch nicht näher beschriebene, in der landwirtschaftlichen Maschine 1 angeordnete Sensoren 26 können die spezifischen Daten 39 des von der landwirtschaftlichen Arbeitsmaschine 1 bearbeiteten Erntegutes 5, wie etwa die Erntegutart, der Erntegutertrag, die Erntegutfeuchte, ein Schichthöhensignal als Indikator für die Bestandsdichte und sofern die landwirtschaftliche Arbeitsmaschine 1 als Mähdrescher 2 ausgeführt ist die Kornfeuchte, der Nichtkornanteil im Erntegut und der Bruchkornanteil bereitgestellt werden.

Die von ebenfalls an sich bekannten, auf der landwirtschaftlichen Arbeitsmaschine 1 angeordneten weiteren Sensoren 26 ermittelten spezifischen Daten 38 der landwirtschaftlichen Arbeitsmaschine 1 können allgemein die Einstellparameter der Arbeitsorgane 20 der landwirtschaftlichen Arbeitsmaschine 1, die Position des oder der Kamerasysteme 27, 28 in der landwirtschaftlichen Arbeitsmaschine 1 und die Fahrgeschwindigkeit der landwirtschaftlichen Arbeitsmaschine 1 umfassen. Ist die landwirtschaftliche Arbeitsmaschine 1 beispielsweise als Mähdrescher 2 ausgeführt, dann können ihren Arbeitsorganen 20 in an sich bekannter Weise Drehzahlsensoren 26 zur Ermittlung der Drehzahl der Dreschorgane 7, Positionssensoren 26 zur Ermittlung der Position des Dreschkorbs 6, Drehzahlsensoren 26 zur Ermittlung der Drehzahl des Reinigungsgebläses 16 und Positionssensoren 26 zur Ermittlung der Sieböffnungsweite der Siebebenen 14, 15 zugeordnet sein.

Aufgrund dessen, dass die mit dem jeweiligen Einzelbild 34 verknüpften spezifischen Daten 33 des Arbeitsprozesses der landwirtschaftlichen Arbeitsmaschine 1 einen weit über den Informationsgehalt des Einzelbildes 34 hinausgehenden Informationsgehalt aufweisen, können mit einer derart strukturierten Bilddatenbank 32 wesentlich genauere Bildanalysen durch geführt werden.

### Bezugszeichenliste:

- 1: landwirtschaftliche Arbeitsmaschine
- 2: Mähdrescher
- 3: Getreideschneidwerk
- 4: Schrägförderer
- 5: Erntegutstrom
- 6: Dreschkorb
- 7: Dreschorgan
- 8: Umlenktrommel
- 9: Hordenschüttler
- 10: Trenneinrichtung
- 11: Körner
- 12: Rücklaufboden
- 13: Zuführboden
- 14: Siebebene
- 15: Siebebene
- 16: Gebläse
- 17: Reinigungseinrichtung
- 18: Elevator
- 19: Korntank
- 20: Arbeitsorgan
- 21: Fahrzeugkabine
- 22: Anzeigeeinrichtung
- 23: Steuer- und Regeleinrichtung
- 24: Betreiber
- 25: Bussystem
- 26: Sensorsystem
- 27: Kamerasystem
- 28: Kamerasystem
- 29: Körnerstrom
- 30: Datenverarbeitungseinrichtung
- 31: Speichereinrichtung
- 32: Bilddatenbank
- 33: spezifische Daten
- 34: Einzelbild
- 35: Speicherkarte
- 36: Zentralrechner
- 37: Bildauswertverfahren
- 38: spezifische Daten
- 39: spezifische Daten
- 40: spezifische Daten
- 41: externe Informationsquelle
- 42: Dritte

- S: Steuersignal
- X: Bilddaten
- Y: Sensorsignal
- Z: externe Information

## Patentansprüche

1. Verfahren zur Erstellung einer Bilddatenbank (32) für ein Bildauswertverfahren, wobei die Einzelbilder (34) der Bilddatenbank (32) während des Arbeitsprozesses einer landwirtschaftlichen Arbeitsmaschine (1, 2) von zumindest einem der landwirtschaftlichen Arbeitsmaschine (1, 2) zugeordneten, mit einer Steuer- und Regeleinrichtung (23) der landwirtschaftlichen Arbeitsmaschine (1, 2) verbundenen Kamerasystem (27, 28) generiert werden, wobei die von dem zumindest einen Kamerasystem (27, 28) generierten Einzelbilder (34) mit spezifischen Daten (33) des Arbeitsprozesses der landwirtschaftlichen Arbeitsmaschine (1, 2) verknüpft werden und jedes mit spezifischen Daten (33) verknüpfte Einzelbild (34) in der Bilddatenbank (32) wiederholt abrufbar und editierbar gespeichert wird, **dadurch gekennzeichnet,**
**dass** die generierten, mit den spezifischen Daten des Arbeitsprozesses verknüpften Einzelbilder (34) an eine von der Steuer- und Regeleinrichtung (23) umfassten Datenverarbeitungseinrichtung (30) oder einen nicht auf der landwirtschaftlichen Arbeitsmaschine (1, 2) befindlichen Zentralrechner übergeben werden, wobei die Bilddatenbank (32) in dem Zentralrechner oder in der Datenverarbeitungseinrichtung (30) generiert wird, und dass die Fahrgeschwindigkeit als zusätzliche Information mit dem jeweiligen Einzelbild (34) verknüpft wird, so dass durch geeignete Schwellwertfilter während einer Bildanalyse dafür gesorgt wird, dass sich die Art der Bildanalyse fahrgeschwindigkeitsabhängig ändert und bei zu hohen Fahrgeschwindigkeiten generierte Einzelbllder (34) während der Bildanalyse unberücksichtigt bleiben.

2. Verfahren zur Erstellung einer Bilddatenbank nach Anspruch 1, **dadurch gekennzeichnet, dass** die spezifischen Daten (33) des Arbeitsprozesses der landwirtschaftlichen Arbeitsmaschine (1, 2) spezifische Daten (38) der landwirtschaftlichen Arbeitsmaschine (1, 2) sind.

3. Verfahren zur Erstellung einer Bilddatenbank nach einem der Ansprüche 1 oder 2, **dadurch gekennzeichnet, dass** die spezifischen Daten (33) des Arbeitsprozesses der landwirtschaftlichen Arbeitsmaschine (1, 2) die spezifischen Daten (39) des von der landwirtschaftlichen Arbeitsmaschine (1, 2) bearbeiteten Erntegutes (5) sind.

4. Verfahren zur Erstellung einer Bilddatenbank nach einem der Ansprüche 1 bis 3, **dadurch gekennzeichnet, dass** die spezifischen Daten (33) des Arbeitsprozesses der landwirtschaftlichen Arbeitsmaschine (1, 2) die spezifischen Daten (40) des von der landwirtschaftlichen Arbeitsmaschine (1, 2) bearbeiteten Territoriums sind.

5. Verfahren zur Erstellung einer Bilddatenbank nach Anspruch 2, **dadurch gekennzeichnet, dass** die spezifischen Daten (38) der landwirtschaftlichen Arbeitsmaschine (1, 2) Einstellparameter der Arbeitsorgane (20) der landwirtschaftlichen Arbeitsmaschine (1, 2), die Position des zumindest einen Kamerasystems (27, 28) in der landwirtschaftlichen Arbeitsmaschine (1, 2) und die Fahrgeschwindigkeit der landwirtschaftlichen Arbeitsmaschine (1, 2) umfassen.

6. Verfahren zur Erstellung einer Bilddatenbank nach Anspruch 3, **dadurch gekennzeichnet, dass** die spezifischen Daten (39) des von der landwirtschaftlichen Arbeitsmaschine (1, 2) bearbeiteten Erntegutes (5) die Emtegutart, der Erntegutertrag, die Erntegutfeuchte, ein Schichthöhensignal als Indikator für die Bestandsdichte und sofern die landwirtschaftliche Arbeitsmaschine (1) als Mähdrescher (2) ausgeführt ist die Kornfeuchte, der Nichtkomanteil im Erntegut und der Bruchkomanteil sind.

7. Verfahren zur Erstellung einer Bilddatenbank nach Anspruch 4, **dadurch gekennzeichnet, dass** die spezifischen Daten (40) des von der landwirtschaftlichen Arbeitsmaschine (1, 2) bearbeiteten Territoriums Positionsdaten der landwirtschaftlichen Arbeitsmaschine (1, 2), die Hangneigung und der Erntezeitpunkt sind.

8. Verfahren zur Erstellung einer Bilddatenbank nach einem der vorhergehenden Ansprüche, **dadurch gekennzeichnet, dass** die spezifischen Daten (33) des Arbeitsprozesses der landwirtschaftlichen Arbeitsmaschine (1, 2) zudem manuell ermittelte Qualitätsparameter, das Hektolitergewicht des Erntegutes (5), eine manuell ermittelte Kornfeuchte und Qualitätsangaben des Kunden umfassen.

9. Verfahren zur Erstellung einer Bilddatenbank nach einem der vorhergehenden Ansprüche, **dadurch gekennzeichnet, dass** der landwirtschaftlichen Arbeitsmaschine (1, 2) eine Vielzahl von Kamerasystemen (27, 28) zugeordnet sind und die Einzelbilder (34) jedes Kamerasystems (27, 28) mit spezifischen Daten (33) des Arbeitsprozesses der landwirtschaftlichen Arbeitsmaschine (1, 2) verknüpft sind und wobei die Einzelbilder (34) in dem Bildauswertverfahren (37) in Abhängigkeit von der jeweiligen Kameraposition miteinander vergleichbar sind.

10. Vorrichtung zur Durchführung des Verfahrens zur Erstellung einer Bilddatenbank für ein Bildauswertverfahren nach Anspruch 1, wobei die von dem zumindest einen Kamerasystem (27, 28) generierten Einzelbilder (34) in einer von einer Steuer- und Regeleinrichtung (23) der landwirtschaftlichen Arbeitsmaschine (1, 2) umfassten Datenverarbeitungseinrichtung (30) mit spezifischen Daten (33) des Arbeitsprozesses der landwirtschaftlichen Arbeitsmaschine (1, 2) verknüpft werden und jedes mit spezifischen Daten (33) verknüpfte Einzelbild (34) in
einer der Da-tenverarbeltungseinrichtung (30) oder einem nicht auf der landwirtschaftlichen Erntemaschine (1, 2) befindlichen Zentralrechner (36) zugeordneten Bilddatenbank (32) wiederholt abrufbar und editierbar gespeichert wird, **dadurch gekennzeichnet, dass** die generierten, mit den spezifischen Daten des Arbeitsprozesses verknüpften Einzelbilder (34) an eine von der Steuerund Regeleinrichtung (23) umfassten Datenverarbeitungseinrichtung (30) oder einen nicht auf der landwirtschaftlichen Arbeitsmaschine (1, 2) befindlichen Zentralrechner übergeben werden, wobei die Bilddatenbank (32) in dem Zentralrechner oder in der Datenverarbeitungseinrichtung (30) generiert wird, und dass die Fahrgeschwindigkeit als zusätzliche information mit dem jeweiligen Einzelbild (34) verknüpft wird, so dass durch geeignete Schwellwertfilter während einer Bildartalyse dafür gesorgt wird, dass sich die Art der Bildanalyse fahrgeschwindigkeitsabhängig ändert und bei zu hohen Fahrgeschwindigkeiten generierte Einzelbilder (34) während der Bildanalyse unberücksichtigt bleiben.

11. Vorrichtung zur Erstellung einer Bilddatenbank für ein Bildauswertverfahren nach Anspruch 10, **dadurch gekennzeichnet, dass** die spezifischen Daten (33) des Arbeitsprozesses der landwirtschaftlichen Arbeitsmaschine von maschineninternen Sensorsystemen (26) generiert werden und/oder über GPS an die Datenverarbeitungseinrichtung (30) übermitteln werden und/oder über eine Eingabeeinheit manuell eingebbar sind.

12. Vorrichtung zur Erstellung einer Bilddatenbank für ein Bildauswertverfahren nach einem der Ansprüche 10 und 11, **dadurch gekennzeichnet, dass** der landwirtschaftlichen Arbeitsmaschine (1, 2) eine Vielzahl von Kamerasysteme (27, 28) zugeordnet sind.

13. Vorrichtung zur Erstellung einer Bilddatenbank für ein Bildauswertverfahren nach einem der Ansprüche 10 und 12, **dadurch gekennzeichnet, dass** die mit dem jeweiligen Elnzeibild (34) verknüpften spezifischen Daten (33) des Arbeitsprozesses der landwirtschaftlichen Arbeitsmaschine (1, 2) in der Datenverarbeitungseinrichtung (30) edltlerbar sind.

14. Vorrichtung zur Erstellung einer Bilddatenbank für ein Bildauswertverfahren nach einem der Ansprüche 10 bis 13, **dadurch gekennzeichnet, dass** die mit dem jeweiligen Einzelbild (34) verknüpften spezifischen Daten (33) des Arbeitsprozesses der landwirtschaftlichen Arbeitsmaschine (1, 2) in dem Zentralrechner (36) editierbar sind.

15. Vorrichtung zur Erstellung einer Bilddatenbank für ein Bildauswertverfahren nach einem der Ansprüche 10 bis 14, **dadurch gekennzeichnet, dass** die in der Datenverarbeitungseinrichtung (30) oder dem Zentralrechner (36) hinterlegte Bilddatenbank (32) an eine Vielzahl von landwirtschaftlichen Arbeitsmaschinen (1,2) und/oder stationärer Recheneinheiten (36) übermittelbar ist oder von diesen abrufbar sind.

## Claims

1. A method of producing an image database (32) for an image evaluation process, wherein the individual images (34) of the image database (32) are generated during the working process of an agricultural working machine (1, 2) by at least one camera system (27, 28) which is associated with the agricultural working machine (1, 2) and which is connected to a control and regulating device (23), wherein the individual images (34) generated by the at least one camera system (27, 28) are linked to specific data (33) of the working process of the agricultural working machine (1, 2) and each individual image (34) linked to specific data (33) is stored in the image database (32) in such a way that it can be repeatedly called up and edited,
**characterised in that** the generated individual images (34) linked to the specific data of the working process are transmitted to a data processing device (30) embraced by the control and regulating device (23) or a central computer not disposed on the agricultural working machine (1, 2), wherein the image database (32) is generated in the central computer or in the data processing device (30) and the travel speed is linked as additional information to the respective individual image (34) so that it is ensured by suitable threshold value filters during an image analysis operation that the nature of the image analysis operation changes in dependence on travel speed and individual images (34) generated at excessively high travel speeds remain disregarded during the image analysis operation.

2. A method of producing an image database according to claim 1 **characterised in that** the specific data (33) of the working process of the agricultural working machine (1, 2) are specific data (38) of the agricultural working machine (1, 2).

3. A method of producing an image database according to one of claims 1 and 2 **characterised in that** the specific data (33) of the working process of the agricultural working machine (1, 2) are the specific data of the crop material (5) processed by the agricultural working machine (1, 2).

4. A method of producing an image database according to one of claims 1 to 3 **characterised in that** the specific data (33) of the working process of the agricultural working machine (1, 2) are the specific data of the territory processed by the agricultural working machine (1, 2).

5. A method of producing an image database according to claim 2 **characterised in that** the specific data (38) of the agricultural working machine (1, 2) include adjustment parameters of the working members (20) of the agricultural working machine (1, 2), the position of the at least one camera system (27, 28) in the agricultural working machine (1, 2) and the travel speed of the agricultural working machine (1, 2).

6. A method of producing an image database according to claim 3 **characterised in that** the specific data (39) of the crop material (5) processed by the agricultural working machine (1, 2) are the kind of crop material, the crop material yield, the crop material moisture content, a layer thickness signal as an indicator for the stand density and if the agricultural working machine (1) is in the form of a combine harvester (2) the grain moisture content, the non-grain component in the crop material and the broken grain component.

7. A method of producing an image database according to claim 4 **characterised in that** the specific data (40) of the territory processed by the agricultural working machine (1, 2) are position data of the agricultural working machine (1, 2), the slope inclination and the harvesting time.

8. A method of producing an image database according to one of the preceding claims **characterised in that** the specific data (33) of the working process of the agricultural working machine (1, 2) additionally include manually ascertained quality parameters, the hectolitre weight of the crop material (5), a manually ascertained grain moisture content and quality details from the customer.

9. A method of producing an image database according to one of the preceding claims **characterised in that** a plurality of camera systems (27, 28) are associated with the agricultural working machine (1, 2) and the individual images (34) of each camera system (27, 28) are linked to specific data (33) of the working process of the agricultural working machine (1, 2) and wherein the individual images (34) can be compared to each other in the image evaluation process (37) in dependence on the respective camera position.

10. Apparatus for carrying out the method of producing an image database for an image evaluation process according to claim 1 wherein the individual images (34) generated by the at least one camera system (27, 28) are linked in a data processing device (30) embraced by the control and regulating device (28) of the agricultural working machine (1, 2) to specific data (33) of the working process of the agricultural working machine (1, 2) and each individual image (34) linked to specific data (33) is stored in such a way that it can be repeatedly called up and edited in an image database (32) associated with the data processing device (30) or a central computer (36) not disposed on the agricultural working machine (1, 2), **characterised in that** the generated individual images (34) linked to the specific data of the working process are transmitted to a data processing device (30) embraced by the control and regulating device (23) or a central computer not disposed on the agricultural working machine (1, 2), wherein the image database (32) is generated in the central computer or in the data processing device (30) and the travel speed is linked as additional information to the respective individual image (34) so that it is ensured by suitable threshold value filters during an image analysis operation that the nature of the image analysis operation changes in dependence on travel speed and individual images (34) generated at excessively high travel speeds remain disregarded during the image analysis operation.

11. Apparatus for producing an image database for an image evaluation process according to claim 10 **characterised in that** the specific data (33) of the working process of the agricultural working machine are generated by machine-internal sensor systems (26) and/or are communicated by way of GPS to the data processing device (30) and/or can be manually inputted by way of an input unit.

12. Apparatus for producing an image database for an image evaluation process according to one of claims 10 and 11 **characterised in that** a plurality of camera systems (27, 28) are associated with the agricultural working machine (1, 2).

13. Apparatus for producing an image database for an image evaluation process according to one of claims 10 and 12 **characterised in that** the specific data (33) of the working process of the agricultural working machine (1, 2), that are linked to the respective individual image (34), can be edited in the data processing device (30).

14. Apparatus for producing an image database for an image evaluation process according to one of claims 10 to 13 **characterised in that** the specific data (33) of the working process of the agricultural working machine (1, 2), that are linked to the respective individual image (34), can be edited in the central computer (36).

15. Apparatus for producing an image database for an image evaluation process according to one of claims 10 to 14 **characterised in that** the image database (32) stored in the data processing device (30) or the central computer (36) can be communicated to or called up from a plurality of agricultural working machines (1, 2) and/or stationary computing units (36).

## Revendications

1. Procédé pour créer une base de données d'images (32) pour un procédé d'évaluation d'images, dans lequel les images individuelles (34) de la base de données d'images (32) sont générées pendant le processus de travail d'une machine de travail agricole (1, 2) par au moins un système de caméra (27, 28) associé à la machine de travail agricole (1, 2) et relié à un dispositif de commande et de régulation (23) de la machine de travail agricole (1, 2), les images individuelles (34) générées par ledit au moins un système de caméra (27, 28) étant associées à des données spécifiques (33) du processus de travail de la machine de travail agricole (1, 2), et chaque image individuelle (34) associée à des données spécifiques (33) étant enregistrée dans la base de données d'images (32) de manière à pouvoir être appelée et éditée de façon répétée, **caractérisé en ce que** les images individuelles (34) générées associées à des données spécifiques du processus de travail sont transmises à un dispositif de traitement de données (30) intégré au dispositif de commande et de régulation (23) ou à un ordinateur central ne se trouvant pas sur la machine de travail agricole (1, 2), la base de données d'images (32) étant générée dans l'ordinateur central ou dans le dispositif de traitement de données (30), et **en ce que** la vitesse de marche est associée comme information supplémentaire à chaque image individuelle (34), de sorte que, pendant une analyse d'images, des filtres à valeur seuil appropriés permettent de faire varier le mode d'analyse des images en fonction de la vitesse de marche et de ne pas prendre en compte, pendant l'analyse des images, les images individuelles (34) générées à des vitesses de marche trop élevées.

2. Procédé pour créer une base de données d'images selon la revendication 1, **caractérisé en ce que** les données spécifiques (33) du processus de travail de la machine de travail agricole (1, 2) sont des données spécifiques (38) de la machine de travail agricole (1, 2).

3. Procédé pour créer une base de données d'images selon une des revendications 1 ou 2, **caractérisé en ce que** les données spécifiques (33) du processus de travail de la machine de travail agricole (1, 2) sont les données spécifiques (39) du produit de récolte (5) traité par la machine de travail agricole (1, 2).

4. Procédé pour créer une base de données d'images selon une des revendications 1 à 3, **caractérisé en ce que** les données spécifiques (33) du processus de travail de la machine de travail agricole (1, 2) sont les données spécifiques (40) du territoire travaillé par la machine de travail agricole (1, 2).

5. Procédé pour créer une base de données d'images selon la revendication 2, **caractérisé en ce que** les données spécifiques (38) de la machine de travail agricole (1, 2) comprennent des paramètres de réglage des organes de travail (20) de la machine de travail agricole (1, 2), la position dudit au moins un système de caméra (27, 28) sur la machine de travail agricole (1, 2) et la vitesse de marche de la machine de travail agricole (1, 2).

6. Procédé pour créer une base de données d'images selon la revendication 3, **caractérisé en ce que** les données spécifiques (39) du produit de récolte (5) traité par la machine de travail agricole (1, 2) sont la nature du produit de récolte, le rendement du produit de récolte, l'humidité du produit de récolte, un signal de hauteur de couche comme indicateur de la densité de plantation et, si la machine de travail agricole (1) est conformée en moissonneusebatteuse (2), l'humidité des grains, la part de non-grain dans le produit de récolte et la part de grains brisés.

7. Procédé pour créer une base de données d'images selon la revendication 4, **caractérisé en ce que** les données spécifiques (40) du territoire travaillé par la machine de travail agricole (1, 2) sont des données de position de la machine de travail agricole (1, 2), la déclivité et la période de récolte.

8. Procédé pour créer une base de données d'images selon une des revendications précédentes, **caractérisé en ce que** les données spécifiques (33) du processus de travail de la machine de travail agricole (1, 2) comprennent en outre des paramètres de qualité déterminés manuellement comme le poids à l'hectolitre du produit de récolte (5), une humidité des grains déterminée manuellement et des indications de qualité du client.

9. Procédé pour créer une base de données d'images selon une des revendications précédentes, **caractérisé en ce qu'**une pluralité de systèmes de caméra (27, 28) est associée à la machine de travail agricole (1, 2), et les images individuelles (34) de chaque système de caméra (27, 28) sont associées à des données spécifiques (33) du processus de travail de la machine de travail agricole (1, 2), les images individuelles (34) étant comparables entre elles en fonction de la position respective de la caméra dans le procédé d'évaluation d'images (37).

10. Dispositif pour réaliser le procédé pour créer une base de données d'images pour un procédé d'évaluation d'images selon la revendication 1, dans lequel les images individuelles (34) générées par ledit au moins un système de caméra (27, 28) sont associées, dans un dispositif de traitement de données (30) intégré à un dispositif de commande et de régulation (23) de la machine de travail agricole (1, 2), à des données spécifiques (33) du processus de travail de la machine de travail agricole (1, 2), et chaque image individuelle (34) associée à des données spécifiques (33) est enregistrée dans la base de données d'images (32) associée au dispositif de traitement de données (30) ou à un ordinateur central ne se trouvant pas sur la machine de travail agricole (1, 2), de manière à pouvoir être appelée et éditée de façon répétée, **caractérisé en ce que** les images individuelles (34) générées associées aux données spécifiques du processus de travail sont transmises à un dispositif de traitement de données (30) intégré au dispositif de commande et de régulation (23) ou à un ordinateur central ne se trouvant pas sur la machine de travail agricole (1, 2), la base de données d'images (32) étant générée dans l'ordinateur central ou dans le dispositif de traitement de données (30), et **en ce que** la vitesse de marche est associée comme information supplémentaire à chaque image individuelle (34), de sorte que, pendant une analyse d'images, des filtres à valeur seuil appropriés permettent de faire varier le mode d'analyse des images en fonction de la vitesse de marche et de ne pas prendre en compte, pendant l'analyse des images, les images individuelles (34) générées à des vitesses de marche trop élevées.

11. Dispositif pour créer une base de données d'images pour un procédé d'évaluation d'images selon la revendication 10, **caractérisé en ce que** les données spécifiques (33) du processus de travail de la machine de travail agricole sont générées par des systèmes de capteur (26) internes à la machine et/ou transmises au dispositif de traitement de données (30) par GPS et/ou peuvent être entrées manuellement au moyen d'une unité d'entrée (22).

12. Dispositif pour créer une base de données d'images pour un procédé d'évaluation d'images selon une des revendications 10 et 11, **caractérisé en ce qu'**une pluralité de systèmes de caméra (27, 28) est associée à la machine de travail agricole (1, 2).

13. Dispositif pour créer une base de données d'images pour un procédé d'évaluation d'images selon une des revendications 10 et 12, **caractérisé en ce que** les données spécifiques (33) du processus de travail de la machine de travail agricole (1, 2) associées à chaque image individuelle (34) peuvent être éditées dans le dispositif de traitement de données (30).

14. Dispositif pour créer une base de données d'images pour un procédé d'évaluation d'images selon une des revendications 10 à 13, **caractérisé en ce que** les données spécifiques (33) du processus de travail de la machine de travail agricole (1, 2) associées à chaque image individuelle (34) peuvent être éditées dans l'ordinateur central (36).

15. Dispositif pour créer une base de données d'images pour un procédé d'évaluation d'images selon une des revendications 10 à 14, **caractérisé en ce que** la base de données d'images (32) enregistrée dans le dispositif de traitement de données (30) ou l'ordinateur central (36) peut être transmise à une pluralité de machines de travail agricole (1, 2) et/ou d'unités de calcul stationnaires (36) ou appelée par celles-ci.
